# EUROPÄISCHE PATENTSCHRIFT

(11) **EP 1 433 513 B1**
(45) Veröffentlichungstag und Bekanntmachung des Hinweises auf die Patenterteilung: **19.04.2006**
(21) Anmeldenummer: 03026355.2
(22) Anmeldetag: 18.11.2003
(51) Int. Cl.: B01D 37/04, B01D 29/66

(54) **Verfahren und Vorrichtung zur Überwachung von Wasseraufbereitungsanlagen**
Method and device for monitoring a water treatment unit
Méthode et dispositif pour contrôler une installation de traitement des eaux

(30) Priorität: 12.12.2002 DE 10257960
(43) Veröffentlichungstag der Anmeldung: 30.06.2004
(73) Patentinhaber: Judo Wasseraufbereitung GmbH, D-71364 Winnenden (DE)
(72) Erfinder: Söcknick, Ralf, Dr., 70806 Kornwestheim (DE); Fiess, Helmut, 71576 Burgstetten (DE); Melcher, Siegfried, 71720 Oberstenfeld (DE)
(74) Vertreter: Kohler Schmid Möbus

(56) Entgegenhaltungen:
- US-A- 5 045 187
- US-A- 5 060 167

## Beschreibung

Die Erfindung betrifft ein Überwachungssystem für Wasseraufbereitungsanlagen, insbesondere für die Hauswasseraufbereitung, mit einer regenerierbaren Wasseraufbereitungsanlage, einer Netzversorgung und einer elektronischen Steuereinrichtung, mittels derer eine Regeneration der regenerierbaren Wasseraufbereitungsanlage automatisch erfolgen kann, sowie ein Verfahren zu dessen Betrieb.

Eine automatisch regenerierbare Wasseraufbereitungsanlage ist beispielsweise aus dem Firmenprospekt "PROFi / PROFiMAT Rückspül-Schutzfilter DN 65-200" der Judo Wasseraufbereitung GmbH bekannt.

In der Hauswasseraufbereitung und auch in der industriellen Wasseraufbereitung sind zahlreiche Filtersysteme und Enthärtungseinrichtungen bekannt. Diese sollen nachfolgende Rohrleitungen, Armaturen, Anlagen oder das Wasser selbst vor Verunreinigungen, Ablagerungen wie Kalk oder auch Korrosion schützen. Beispielsweise sind Rückspülfilter in den Schriften DE 39 00 390 C1 oder DE 199 61 406 C1 beschrieben. Ohne Schutzfilter kann es zu Störungen an den Armaturen kommen, oder es können sich elektrochemische Elemente bilden. Um eine einwandfreie Filterfunktion zu gewährleisten, müssen die Filter in regelmäßigen Abständen gereinigt, d.h. rückgespült ("regeneriert") werden.

Nachteilig bei derartigen rückspülbaren Filtereinrichtungen ist jedoch, dass der Rückspülvorgang manuell durchgeführt und somit vergessen werden kann. Um diesen Nachteil zu vermeiden, wird bei anderen Geräten der Rückspülvorgang automatisch mit Hilfe einer elektronischen Steuerung durchgeführt. Solche automatischen Rückspülfilter sind bekannt aus US-A-5 045 187 DE 44 07 629 A1 oder durch die oben genannte Firmendruckschrift "PROFi / PROFiMAT" der Firma Judo Wasseraufbereitung GmbH, Hohreuschstr. 39-41, D-71364 Winnenden.

Wird die Stromversorgung während der automatischen Rückspülung, d. h. bei geöffnetem Spülventil unterbrochen, so können größere Wassermengen unkontrolliert austreten.

Das gleiche Problem stellt sich auch bei anderen Wasseraufbereitungsgeräten wie Enthärtungsanlagen, bei denen Ventile elektronisch gesteuert werden.

Eine solche Enthärtungsanlage ist in DE 42 17 652 C1 beschrieben. Aufgabe der vorliegenden Erfindung ist daher, oben genannte Nachteile zu vermeiden und ein Überwachungssystem der eingangs genannten Art und ein zugehöriges Betriebsverfahren vorzustellen, die eine regelmäßige Rückspülung bzw. Regeneration garantieren und gleichzeitig vermeiden, dass bei Unterbrechung der Energieversorgung während einer Regeneration ein oder mehrere Spülventile geöffnet bleiben.

Diese Aufgabe wird erfindungsgemäß überraschend einfach dadurch gelöst, dass das eingangs vorgestellte Überwachungssystem eine Notstromquelle und eine erste Messvorrichtung zur Kontrolle des Energievorrats der Notstromquelle umfasst, und dass die elektronische Steuereinrichtung eine Schaltung umfasst, die nur dann den Beginn einer Regeneration zulässt, wenn der Energievorrat der Notstromquelle zur vollständigen Durchführung der Regeneration ausreicht.

Damit wird zuverlässig verhindert, dass ein oder mehrere geöffnete Spülventile aufgrund einer unterbrochenen Energieversorgung nicht mehr schließen und unkontrolliert Wasser austritt. Bei Ausfall der Netzspannung während einer Regeneration steht durch die Notstromquelle genügend Energie für den Abschluss des Regenerierungsvorgangs zur Verfügung, insbesondere auch um die Steuerventile zu schließen. Falls die Notstromquelle nicht über ausreichend Energie verfügt, so wird eine Regeneration, wie das Rückspülen eines Filters, erst gar nicht eingeleitet.

Bei einer Ausführungsform des erfindungsgemäßen Überwachungssystems umfasst die regenerierbare Wasseraufbereitungsanlage ein rückspülbares Siebfilter. Unter Regeneration wird in diesem Fall eine Rückspülung des Siebsfilters verstanden, wodurch Ablagerungen (Filterrückstände) auf dem Filternetz abgetragen werden.

Bei einer anderen Ausführungsform des erfindungsgemäßen Überwachungssystems umfasst die regenerierbare Wasseraufbereitungsanlage eine regenerierbare Enthärtungseinrichtung. Die Regeneration kann zum Beispiel eine Behandlung von erschöpftem Ionenaustauscherharz mit verdünnter Salzsole umfassen, wobei die entsprechenden Volumenströme mittels Ventilen gesteuert werden.

Bevorzugt ist eine erfindungsgemäße Ausführungsform, bei der das Überwachungssystem eine zweite Messvorrichtung zur Kontrolle der Spannung der Netzversorgung umfasst, und dass die Schaltung weiterhin nur dann den Beginn einer Regeneration zulässt, wenn an der Netzversorgung Netzspannung anliegt. Dadurch wird verhindert, dass eine Regeneration allein über Notstrom gefahren wird, was für die Notstromquelle sehr belastend sein kann und deren Lebensdauer verringert.

Vorteilhafter Weise ist eine Ausführungsform eines erfindungsgemäßen Überwachungssystems dadurch gekennzeichnet, dass die Notstromquelle eine Batterie und/oder einen Akku umfasst. Dadurch kann eine lokale und zuverlässige Notstromversorgung gewährleistet werden.

Bei einer Weiterbildung dieser Ausführungsform umfasst die erste Messvorrichtung ein Spannungsmessgerät zur Bestimmung der Spannung der Batterie und/oder des Akkus. Damit kann auf einfache Weise eine erste Information über den Energiezustand der Batterie oder des Akkus gewonnen werden.

Eine ergänzende Weiterbildung sieht vor, dass ein Mittel zur Belastung der Batterie und/oder des Akkus mit Strom vorgesehen ist. Das Verhalten, insbesondere die Spannung der Batterie oder des Akkus, unter Last lässt einen sehr zuverlässige Aussage über den Energievorrat zu.

Eine weitere, bevorzugte Ausführungsform des erfindungsgemäßen Überwachungssystems ist dadurch gekennzeichnet, dass das Überwachungssystem einen Signalgeber, insbesondere einen akustischen und/oder optischen Signalgeber aufweist, welcher einen zu einer vollständigen Durchführung einer Regeneration nicht ausreichenden Energievorrat der Notstromquelle und/oder eine ausgefallene Netzspannung der Netzversorgung signalisiert. Der Signalgeber zeigt damit einen nicht ordnungsgemäßen Betriebszustand der regenerierbaren Wasseraufbereitungsanlage an. Insbesondere sind defekte, fehlende oder entladene Batterien oder Akkus leicht erkennbar. Der Signalgeber selbst kann eine zusätzliche Stromquelle, etwa eine separate, zusätzliche Batterie aufweisen, um ein Signal auch bei Ausfall sowohl der Netzversorgung als auch der Notstromversorgung zu gewährleisten.

Ganz besonders bevorzugt ist eine Ausführungsform des erfindungsgemäßen Überwachungssystems, bei der eine Notschaltung vorgesehen ist, die im Falle eines Ausfalls der Netzspannung der Netzversorgung während einer Regeneration die Stromversorgung des Überwachungssystems, insbesondere für die Regeneration, auf die Notstromquelle umstellt. Eine Notstromversorgung kann zwar prinzipiell auch dadurch gewährleistet werden, dass der Notstrom und der Netzstrom parallel auf den Eingang der elektronischen Steuereinrichtung gelegt werden; zum Schutz vor Beschädigungen insbesondere der Notstromquelle ist aber eine Umschaltung durch die Notschaltung bevorzugt.

In ähnlicher Weise bevorzugt ist eine Ausführungsform, bei der ein elektronisches Bauteil, insbesondere ein MOSFET, Relais oder Transistor, vorgesehen ist, mittels dessen bei Anliegen einer Netzspannung der Netzversorgung an der elektronischen Steuerungseinrichtung die Notstromquelle von der Netzversorgung getrennt ist.

Als besonders vorteilhaft wird auch eine Ausführungsform des erfindungsgemäßen Überwachungssystems angesehen, die dadurch gekennzeichnet ist, dass die Notstromquelle einen Akku umfasst, und dass ein Ladegerät vorgesehen ist, mittels dessen der Akku über die Netzversorgung geladen werden kann. Dadurch kann der Akku leicht im Einsatzfall stets seine gesamte Energiekapazität zur Verfügung stellen.

In den Rahmen der vorliegenden Erfindung fällt auch ein Verfahren zum Betrieb eines oben beschriebenen Überwachungssystems, wobei die elektronische Steuereinrichtung automatisch Regenerationen der regenerierbaren Wasseraufbereitungsanlage veranlasst, und das dadurch gekennzeichnet ist, dass die erste Messvorrichtung den Energievorrat der Notstromquelle misst und dass nur dann von der elektronischen Steuereinrichtung eine Regeneration zugelassen wird, wenn der Energievorrat der Notstromquelle zur vollständigen Durchführung einer Regeneration ausreicht. Damit ist gesichert, dass selbst im Falle eines Ausfalls der Netzspannung kurz nach Beginn einer Regeneration noch genügend Energie zur Verfügung steht, um die Regeneration zu beenden und insbesondere alle Steuerventile wieder zu schließen.

Besonders bevorzugt ist eine Variante des erfindungsgemäßen Verfahrens, bei dem die Regeneration die Rückspülung eines Siebfilters umfasst. Der Siebfilter wird von zurückgehaltenen Verunreinigungen befreit und erreicht wieder seine volle Durchflusskapazität.

Vorteilhaft ist auch eine erfindungsgemäße Verfahrensvariante, die dadurch gekennzeichnet ist, dass die zweite Messvorrichtung die Spannung der Netzversorgung misst und dass nur dann von der elektronischen Steuervorrichtung eine Regeneration zugelassen wird, wenn die Netzspannung an der Netzversorgung anliegt. Dadurch wird verhindert, dass eine Regeneration allein mittels Notstrom durchgeführt wird und somit eine längere Unterbrechung der Netzspannung unbemerkt bleiben könnte. Am besten erfolgt die Netzerkennung durch Überwachung der Spannung direkt an den Anschlüssen eines Steckernetzgeräts. Das Steckernetzgerät, welches die Netzversorgung des Überwachungssystems bewirkt, ist beispielsweise mit seinen Anschlüssen in einer lokalen Steckdose eingesteckt und enthält gegebenenfalls einen Transformator und einen Gleichrichter.

Besonders bevorzugt ist eine Verfahrensvariante, bei der eine Messung des Energievorrats der Notstromquelle und/oder eine Messung der Netzspannung bei jedem Anlegen der Netzspannung der Netzversorgung an das Überwachungssystem erfolgt. Insbesondere wenn eine längere Netzunterbrechung vorlag, ist die Gefahr groß, dass sich während dieser Zeit der Energievorrat der Notstromquelle deutlich verringert hat. Durch die erfindungsgemäße Verfahrensvariante wird eine kritische Verringerung dieses Energievorrats rechtzeitig entdeckt.

Eine weitere, besonders bevorzugte erfindungsgemäße Verfahrensvariante sieht vor, dass eine Messung des Energievorrats der Notstromquelle und/oder eine Messung der Netzspannung unmittelbar vor jeder Regeneration erfolgt. Dadurch kann für die Frage der Zulässigkeit der Einleitung einer Regeneration auf aktuelle Informationen über den Energiegehalt der Notstromquelle zurückgegriffen werden.

In einer Verfahrensvariante der Erfindung erfolgt eine Messung des Energievorrats der Notstromquelle und/oder eine Messung der Netzspannung in regelmäßigen Zeitintervallen, insbesondere in Zeitintervallen zwischen einer Minute und drei Monaten. Die Zeitintervalle können insbesondere der typischen Zeit von merklichen Energieverlusten der Art der Notstromquelle entsprechend angepasst werden. Auch kann eine Überprüfung des Energievorrats unabhängig von den Zeitpunkten der Regeneration oder auch gerade zwischen den Regenerationen erfolgen, um dem Benutzer Gelegenheit zu geben, den Energievorrat der Notstromversorgung rechtzeitig aufzufüllen, bevor eine Regeneration mangels Notstromenergie ausfiele.

Eine bevorzugte Variante des erfindungsgemäßen Verfahrens ist dadurch gekennzeichnet, dass zur Messung des Energievorrats der Batterie und/oder des Akkus die Batterie und/oder der Akku mit einem Strom, insbesondere mit einer Stromstärke zwischen 0,1 A und 1 A, belastet wird, insbesondere während eines Zeitraums zwischen 1 Millisekunde und 1 Sekunde. Die Messung des Energievorrats der Batterie oder des Akkus erfolgt am zuverlässigsten unter Last. Bei geringem Energievorrat bricht die Spannung unter Last zusammen. Bei nur kurzer Lastdauer wird der Energievorrat nur unwesentlich durch die Messung verringert.

Eine erfindungsgemäße Weiterentwicklung dieser Verfahrensvariante sieht vor, dass nur dann von der elektronischen Steuereinrichtung eine Regeneration zugelassen wird, wenn die Spannung der Batterie und/oder des Akkus am Ende der Belastung einen Mindestwert, insbesondere zwischen 75% und 85% der Nennspannung der Batterie und/oder des Akkus, oder einen höheren Wert erreicht. Ein relativer Spannungswert in der Größenordnung 75% oder mehr ist unter Last ein Zeichen eines guten Ladezustands eines Akkus oder einer Batterie.

Eine andere, vorteilhafte erfindungsgemäße Verfahrensvariante ist dadurch gekennzeichnet, dass der Signalgeber bei ausgefallener Netzspannung der Netzversorgung und/oder bei einem Energievorrat der Notstromquelle, welcher zur vollständigen Durchführung einer Regeneration nicht ausreicht, Signal gibt, und insbesondere unterschiedliche Signale bei unterschiedlichem Anlass gibt. Dadurch können Probleme mit der Energieversorgung schnell erkannt, leicht unterschieden und ein Beheben veranlasst werden.

Vorteilhaft ist weiterhin eine Verfahrensvariante, bei der bei Anliegen einer Netzspannung der Netzversorgung an der elektronischen Steuereinrichtung die Notstromquelle von der Netzversorgung getrennt wird. Dadurch wird die Notstromquelle vor Beschädigungen geschützt, etwa durch Überspannungen auf der Netzstromquelle oder dergleichen.

Ebenso vorteilhaft ist in diesem Zusammenhang eine Verfahrensvariante, bei der im Falle eines Ausfalls der Netzspannung der Netzversorgung während einer Regeneration die Stromversorgung des Überwachungssystems, insbesondere für die Regeneration, automatisch auf die Notstromquelle umgestellt wird. Die Notstromquelle steht dann für die Energieversorgung genau dann zur Verfügung, wenn die Netzspannung ausfällt; andererseits ist die Notstromquelle während des Normalbetriebs nicht unnötig durch die Kopplung an die Netzstromquelle bei Überspannungen gefährdet.

Eine weitere, bevorzugte Verfahrensvariante sieht vor, dass der Akku bei Anliegen der Netzspannung der Netzversorgung über die Netzversorgung geladen wird. Dadurch kann stets die volle Energiekapazität des Akkus im Bedarfsfall genutzt werden.

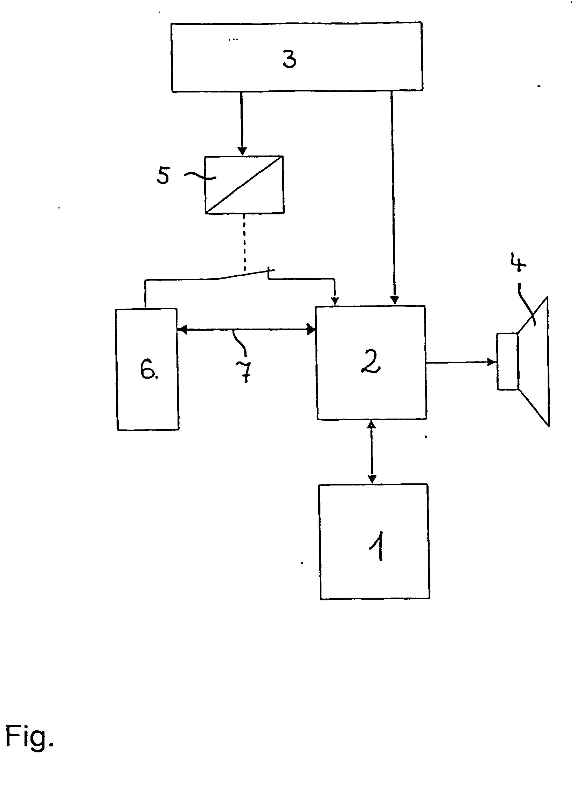

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Die Erfindung ist in der Zeichnung dargestellt und wird anhand eines Ausführungsbeispiels näher erläutert. Die Figur zeigt einen schematischen Aufbau einer Ausführungsform der erfindungsgemäßen Vorrichtung zur Überwachung von Wasseraufbereitungsanlagen.

Eine regenerierbare Wasseraufbereitungsanlage 1 ist mit einer elektronischen Steuereinrichtung 2 und einer Netzversorgung 3, etwa einem Steckernetzgerät in einer Steckdose, ausgestattet. Bei der Wasseraufbereitungsanlage 1 handelt es sich zum Beispiel um einen rückspülbaren Siebfilter. Solche Filter müssen in regelmäßigen Abständen rückgespült werden. Die regelmäßige Rückspülung wird mittels der elektronischen Steuereinrichtung 2 automatisch, etwa in regelmäßigen Zeitabständen oder bei festgestelltem Bedarf, durchgeführt. Fällt die Netzversorgung 3 aus, so wird während dieser Zeit keine automatische Rückspülung gestartet und ein Signalgeber 4 warnt optional durch ein optisches und/oder akustisches Signal. Fällt die Netzversorgung 3 während einer bereits gestarteten Rückspülung aus, so schließt ein Relais 5 die Verbindung von einer Batterie 6 und der elektronischen Steuereinrichtung 2. Die bereits begonnene Rückspülung kann mittels der Energieversorgung über die Batterie 6 zu Ende geführt werden.

Die Batterie 6 selbst wird in regelmäßigen Abständen über die Netzversorgung 3 oder auch direkt über die Messleitung 7 mittels einer ersten Messvorrichtung, welche hier in der elektronischen Steuereinrichtung 2 integriert ist, kontrolliert, und es wird nur dann eine Rückspülung automatisch mittels der elektronischen Steuereinrichtung 2 gestartet, wenn die Kapazität bzw. der Energievorrat der Batterie 6 ausreicht, um die Rückspülung ohne die Netzversorgung 3 vollständig durchzuführen. Damit ist gewährleistet, dass eine bereits begonnene Rückspülung stets zu Ende geführt werden kann. Wird bei dem Test der Batterie 6 festgestellt, dass deren Kapazität nicht für die Durchführung der Rückspülung ohne Netzversorgung 3 ausreicht, so kann optional ein optisches und/oder akustisches Warnsignal am Signalgeber 4 herausgegeben werden.

## Patentansprüche

1. Überwachungssystem für Wasseraufbereitungsanlagen, insbesondere für die Hauswasseraufbereitung, mit einer regenerierbaren Wasseraufbereitungsanlage (1), einer Netzversorgung (3) und einer elektronischen Steuereinrichtung (2), mittels derer eine Regeneration der regenerierbaren Wasseraufbereitungsanlage (1) automatisch erfolgen kann,
**dadurch gekennzeichnet,**
**dass** das Überwachungssystem eine Notstromquelle und eine erste Messvorrichtung zur Kontrolle des Energievorrats der Notstromquelle umfasst,
und **dass** die elektronische Steuereinrichtung (2) eine Schaltung umfasst, die nur dann den Beginn einer Regeneration zulässt, wenn der Energievorrat der Notstromquelle zur vollständigen Durchführung der Regeneration ausreicht.

2. Überwachungssystem nach Anspruch 1, **dadurch gekennzeichnet, dass** die regenerierbare Wasseraufbereitungsanlage (1) ein rückspülbares Siebfilter und/oder eine regenerierbare Enthärtungseinrichtung umfasst.

3. Überwachungssystem nach einem der vorhergehenden Ansprüche, **dadurch gekennzeichnet, dass** das Überwachungssystem eine zweite Messvorrichtung zur Kontrolle der Spannung der Netzversorgung (3) umfasst, und **dass** die Schaltung weiterhin nur dann den Beginn einer Regeneration zulässt, wenn an der Netzversorgung (3) Netzspannung anliegt.

4. Überwachungssystem nach einem der vorhergehenden Ansprüche, **dadurch gekennzeichnet, dass** die erste Messvorrichtung ein Spannungsmessgerät zur Bestimmung der Spannung einer Batterie (6) und/oder eines Akkus der Notstromquelle umfasst.

5. Überwachungssystem nach einem der vorhergehenden Ansprüche, **dadurch gekennzeichnet, dass** das Überwachungssystem einen Signalgeber (4), insbesondere einen akustischen und/oder optischen Signalgeber (4) aufweist, welcher einen zu einer vollständigen Durchführung einer Regeneration nicht ausreichenden Energievorrat der Notstromquelle und/oder eine ausgefallene Netzspannung der Netzversorgung (3) signalisiert.

6. Überwachungssystem nach einem der vorherigen Ansprüche, **dadurch gekennzeichnet, dass** eine Notschaltung vorgesehen ist, die im Falle eines Ausfalls der Netzspannung der Netzversorgung (3) während einer Regeneration die Stromversorgung des Überwachungssystems, insbesondere für die Regeneration, auf die Notstromquelle umstellt.

7. Überwachungssystem nach einem der vorherigen Ansprüche, **dadurch gekennzeichnet, dass** ein elektronisches Bauteil, insbesondere ein MOSFET, Relais (5) oder Transistor, vorgesehen ist, mittels dessen bei Anliegen einer Netzspannung der Netzversorgung (3) an der elektronischen Steuerungseinrichtung (2) die Notstromquelle von der Netzversorgung (3) getrennt ist.

8. Verfahren zum Betrieb eines Überwachungssystems nach einem der Ansprüche 1 bis 7, wobei die elektronische Steuereinrichtung (2) automatisch Regenerationen der regenerierbaren Wasseraufbereitungsanlage (1) veranlasst, **dadurch gekennzeichnet, dass** die erste Messvorrichtung den Energievorrat der Notstromquelle misst und **dass** nur dann von der elektronischen Steuereinrichtung (2) eine Regeneration zugelassen wird, wenn der Energievorrat der Notstromquelle zur vollständigen Durchführung einer Regeneration ausreicht.

9. Verfahren nach Anspruch 8, **dadurch gekennzeichnet, dass** die Regeneration die Rückspülung eines Siebfilters umfasst.

10. Verfahren nach einem der Ansprüche 8 oder 9 in Verbindung mit Anspruch 3, **dadurch gekennzeichnet, dass** die zweite Messvorrichtung die Spannung der Netzversorgung (3) misst und dass nur dann von der elektronischen Steuervorrichtung (2) eine Regeneration zugelassen wird, wenn die Netzspannung an der Netzversorgung (3) anliegt.

11. Verfahren nach einem der Ansprüche 8 bis 10, **dadurch gekennzeichnet, dass** eine Messung des Energievorrats der Notstromquelle und/oder eine Messung der Netzspannung bei jedem Anlegen der Netzspannung der Netzversorgung (3) an das Überwachungssystem und/oder eine Messung des Energievorrats der Notstromquelle und/oder eine Messung der Netzspannung unmittelbar vor jeder Regeneration und/oder eine Messung des Energievorrats der Notstromquelle und/oder eine Messung der Netzspannung in regelmäßigen Zeitintervallen, insbesondere in Zeitintervallen zwischen einer Minute und drei Monaten, erfolgt.

12. Verfahren nach einem der Ansprüche 8 bis 11 in Verbindung mit Anspruch 5, **dadurch gekennzeichnet, dass** der Signalgeber (4) bei ausgefallener Netzspannung der Netzversorgung (3) und/oder bei einem Energievorrat der Notstromquelle, welcher zur vollständigen Durchführung einer Regeneration nicht ausreicht, Signal gibt, und insbesondere unterschiedliche Signale bei unterschiedlichem Anlass gibt.

13. Verfahren nach einem der Ansprüche 8 bis 12, **dadurch gekennzeichnet, dass** bei Anliegen einer Netzspannung der Netzversorgung (3) an der elektronischen Steuereinrichtung (2) die Notstromquelle von der Netzversorgung (3) getrennt wird.

14. Verfahren nach einem der Ansprüche 8 bis 13, **dadurch gekennzeichnet, dass** im Falle eines Ausfalls der Netzspannung der Netzversorgung (3) während einer Regeneration die Stromversorgung des Überwachungssystems, insbesondere für die Regeneration, automatisch auf die Notstromquelle umgestellt wird.

## Claims

1. Monitoring system for water treatment systems, in particular for domestic water treatment, comprising a water treatment system (1) which can be regenerated, a mains supply (3) and an electronic control means (2) by means of which the regenerative water treatment system (1) can be regenerated automatically, **characterized in that** the monitoring system comprises an emergency power source and a first measuring device for checking the energy reserve of the emergency power source, and that the electronic control means (2) comprises a circuit which permits start of regeneration only when the energy reserve of the emergency power source is sufficient to perform complete regeneration.

2. Monitoring system according to claim 1, **characterized in that** the regenerative water treatment system (1) comprises a backwashing filtering screen and/or a regenerative softening means.

3. Monitoring system according to any one of the preceding claims, **characterized in that** the monitoring system comprises a second measuring device for checking the voltage of the mains supply (3), and that the circuit moreover permits the start of regeneration only when a mains voltage is applied to the mains supply (3).

4. Monitoring system according to any one of the preceding claims, **characterized in that** the first measuring device comprises a voltage measuring device for determining the voltage of a battery (6) and/or of an accumulator battery of the emergency power source.

5. Monitoring system according to any one of the preceding claims, **characterized in that** the monitoring system comprises a signal transmitter (4), in particular an acoustic and/or optical signal transmitter (4), which signals when the energy reserve of the emergency power source is not sufficient for complete regeneration and/or signals failure of the mains voltage of the mains supply (3).

6. Monitoring system according to any one of the preceding claims, **characterized in that** an emergency circuit is provided which switches the current supply of the monitoring system, in particular for regeneration, over to the emergency power source when the mains voltage of the mains supply (3) fails during regeneration.

7. Monitoring system according to any one of the preceding claims, **characterized in that** an electronic component, in particular a MOSFET, a relay (5) or a transistor, is provided by means of which the emergency power source is separated from the mains supply (3) when a mains voltage of the mains supply (3) is applied at the electronic control means (2).

8. Method for operating a monitoring system according to any one of the claims 1 through 7, wherein the electronic control means (2) causes automatic regeneration of the regenerative water treatment system (1), **characterized in that** the first measuring device measures the energy reserve of the emergency power source, and the electronic control means (2) permits regeneration only when the energy reserve of the emergency power source is sufficient for performing complete regeneration.

9. Method according to claim 8, **characterized in that** regeneration comprises backwashing of a filtering screen.

10. Method according to any one of the claims 8 or 9 in connection with claim 3, **characterized in that** the second measuring device measures the voltage of the mains supply (3), and the electronic control device (2) permits regeneration only when the mains voltage is applied at the mains supply (3).

11. Method according to any one of the claims 8 through 10, **characterized in that** the energy reserve of the emergency power source and/or the mains voltage are measured every time a mains voltage of the mains supply (3) is applied to the monitoring system and/or the energy reserve of the emergency power source and/or mains voltage are measured directly prior to any regeneration and/or the energy reserve of the emergency power source and/or the mains voltage are measured in regular time intervals, in particular, in time intervals of between one minute and three months.

12. Method according to any one of the claims 8 through 11 in connection with claim 5, **characterized in that** in case of failure of the mains voltage or mains supply (3) and/or in case the energy reserve of the emergency power source is insufficient for performing complete regeneration, the signal transmitter (4) issues a signal and, in particular, different signals for different causes.

13. Method according to any one of the claims 8 through 12, **characterized in that** when a mains voltage of the mains supply (3) is applied to the electronic control means (2), the emergency power source is separated from the mains supply (3).

14. Method according to any one of the claims 8 through 13, **characterized in that** in case of failure of the mains voltage of the mains supply (3) during regeneration, the current supply of the monitoring system, in particular for regeneration, is automatically switched over to the emergency power source.

## Revendications

1. Système de surveillance d'installations de traitement des eaux, en particulier pour le traitement des eaux domestiques, comportant une installation de traitement des eaux (1) pouvant être régénérée, une alimentation par secteur (3) et un dispositif de commande électronique (2) au moyen duquel une régénération de l'installation de traitement des eaux (1), pouvant être régénérée, peut se dérouler de manière automatique,
**caractérisé en ce que**
le système de surveillance comporte une source de courant de secours et un premier dispositif de mesure pour le contrôle de la réserve d'énergie de la source de courant de secours et
**en ce que** le dispositif de commande électronique (2) comporte un circuit qui permet uniquement de débuter la régénération si la réserve d'énergie de la source de courant de secours suffit à l'exécution complète de la régénération.

2. Système de surveillance selon la revendication 1, **caractérisé en ce que** l'installation de traitement des eaux pouvant être régénérée (1) comporte un filtre à tamis rétrolavable et/ou un dispositif d'adoucissement pouvant être régénéré.

3. Système de surveillance selon l'une quelconque des revendications précédentes, **caractérisé en ce que** le système de surveillance comporte un second dispositif de mesure pour le contrôle de la tension de l'alimentation par secteur (3) et **en ce que** le circuit permet encore uniquement de débuter une régénération si une tension secteur est présente dans l'alimentation par secteur (3).

4. Système de surveillance selon l'une quelconque des revendications précédentes, **caractérisé en ce que** le premier dispositif de mesure comporte un appareil de mesure de la tension destiné à déterminer la tension d'une batterie (6) et/ou d'un accumulateur de la source de courant de secours.

5. Système de surveillance selon l'une quelconque des revendications précédentes, **caractérisé en ce que** le système de surveillance comporte un émetteur de signaux (4), en particulier un émetteur de signaux (4) acoustique et/ou optique, lequel signale une réserve d'énergie, de la source de courant de secours, insuffisante pour une exécution complète d'une régénération et/ou une absence de tension secteur de l'alimentation par secteur (3).

6. Système de surveillance selon l'une quelconque des revendications précédentes, **caractérisé en ce qu'**un circuit de secours est prévu, lequel fait passer à la source de courant de secours, dans le cas d'une panne de la tension secteur de l'alimentation par secteur (3) pendant une régénération, l'alimentation en courant du système de surveillance, en particulier pour la régénération.

7. Système de surveillance selon l'une quelconque des revendications précédentes, **caractérisé en ce qu'**on a prévu un composant électronique, en particulier un MOSFET, un relais (5) ou un transistor, au moyen duquel la source de courant de secours est séparée de l'alimentation par secteur (3) dans le cas où une tension secteur de l'alimentation par secteur (3) serait présente dans le dispositif de commande électronique (2).

8. Procédé d'exploitation d'un système de surveillance selon l'une quelconque des revendications 1 à 7, le dispositif de commande électronique (2) occasionnant automatiquement des régénérations de l'installation de traitement des eaux pouvant être régénérée (1), **caractérisé en ce que** le premier dispositif de mesure mesure la réserve d'énergie de la source de courant de secours et **en ce qu'**à ce moment-là uniquement le dispositif de commande électronique (2) permet une régénération lorsque la réserve d'énergie de la source de courant de secours suffit pour l'exécution complète d'une régénération.

9. Procédé selon la revendication 8, **caractérisé en ce que** la régénération comprend le rétrolavage d'un filtre à tamis.

10. Procédé selon l'une quelconque des revendications 8 ou 9 en liaison avec la revendication 3, **caractérisé en ce que** le second dispositif de mesure mesure la tension de l'alimentation par secteur (3) et ce qu'alors uniquement le dispositif de commande électronique (2) permet une régénération lorsque la tension secteur est présente dans l'alimentation par secteur (3).

11. Procédé selon l'une quelconque des revendications 8 à 10, **caractérisé en ce qu'**a lieu une mesure de la réserve d'énergie de la source de courant de secours et/ou une mesure de la tension secteur, lors de chaque application de la tension secteur de l'alimentation par secteur (3) au système de surveillance, et/ou une mesure de la réserve d'énergie de la source de courant de secours et/ou une mesure de la tension secteur tout de suite avant chaque régénération et/ou une mesure de la réserve d'énergie de la source de courant de secours et/ou une mesure de la tension secteur à des intervalles de temps réguliers, en particulier à des intervalles de temps compris entre une minute et trois mois.

12. Procédé selon l'une quelconque des revendications 8 à 11 en liaison avec la revendication 5, **caractérisé en ce que** l'émetteur de signaux (4) émet un signal, lors d'une panne de tension secteur de l'alimentation par secteur (3) et/ou lors d'une réserve d'énergie de la source de courant de secours qui ne suffit pas pour l'exécution complète d'une régénération, et en particulier des signaux différents pour des occasions différentes.

13. Procédé selon l'une quelconque des revendications 8 à 12, **caractérisé en ce que** dans le cas de la présence d'une tension secteur de l'alimentation par secteur (3) dans le dispositif de commande électronique (2), la source de courant de secours est séparée de l'alimentation secteur (3).

14. Procédé selon l'une quelconque des revendications 8 à 13, **caractérisé en ce que**, dans le cas d'une panne de la tension secteur de l'alimentation par secteur (3) pendant une régénération, l'alimentation en courant du système de surveillance, en particulier pour la régénération, est automatiquement passée sur la source de courant de secours.
